# EUROPÄISCHE PATENTANMELDUNG

(11) **EP 1 300 927 A1**
(43) Veröffentlichungstag der Anmeldung: **09.04.2003**
(21) Anmeldenummer: 01810971.0
(22) Anmeldetag: 05.10.2001
(51) Int. Cl.: H02K 11/00, H01R 13/24

(54) **Elektrische Kraft- und/oder Arbeitsmaschine mit einem mit dem Rotor in schleifendem Körperkontakt stehenden Kontaktmittel zur Herstellung einer permanenten elektrisch leitenden Verbindung zum Rotor im Betrieb**

(71) Anmelder: ABB RESEARCH LTD., 8050 Zürich (CH)
(72) Erfinder: Suter, Marco, 5406 Rütihof (CH); Ronner, Beat, 5415 Nussbaumen (CH)
(74) Vertreter: ABB Patent Attorneys

(57) **Zusammenfassung**

Die vorliegende Erfindung betrifft einen Elektromotor (1), dessen Rotor (2) an einem seiner beiden Enden in seinem Rotationszentrum in axialer Richtung von der Spitze (5) eines rotatorisch feststehenden und elektrisch leitenden Kontaktstifts (6) berührt wird, derart, dass ein schleifender Körperkontakt zwischen dem Rotor (2) und dem Kontaktstift (6) entsteht und eine am Kontaktstift 6) abgreifbare elektrisch leitende Verbindung zum Rotor (2) hergestellt wird, welche ein permanente Überwachung der elektrischen Spannung zwischen Rotor (2) und Stator (8) oder eine permanente Erdung des Rotors (2) beim Betrieb des Motors (1) ermöglicht. Eine derartige Konstruktion stellt eine zuverlässige elektrische Verbindung zum Rotor (2) auch bei sehr hohen Drehzahlen sicher und ist zudem sehr verschleissarm.

## Beschreibung

### Technisches Gebiet

Die vorliegende Erfindung betrifft eine elektrische Kraft- und/oder Arbeitsmaschine mit einem um eine Rotationsachse rotierbaren Rotor und mit einem mit dem Rotor mindestens teilweise in schleifendem Körperkontakt stehenden Kontaktmittel zur Herstellung einer permanenten und an einem bezogen auf die Kraft- und/oder Arbeitsmaschine feststehenden Ort abgreifbaren elektrisch leitenden Verbindung zum Rotor während dem Betrieb, ein Kontaktmittel für eine solche Kraft- und/oder Arbeitsmaschine, ein Verfahren zur Herstellung einer permanenten, elektrisch leitenden Verbindung zu einem Rotor einer elektrischen Kraft- und/oder Arbeitsmaschine sowie eine Anwendung des Verfahrens zur Messung einer elektrischen Spannung zwischen einem Rotor und einem Stator einer elektrischen Kraft- und/oder Arbeitsmaschine oder zur Erdung eines Rotors einer solchen Maschine gemäss den Oberbegriffen der unabhängigen Patentansprüche.

### Stand der Technik

Bei rotatorischen elektrischen Kraft- und/oder Arbeitsmaschinen, z.B. Elektromotoren und Generatoren, kann im Betrieb, insbesondere mit leistungselektronischen Umrichtern, zwischen Rotor und Stator eine elektrische Spannung entstehen, welche zu Funkenüberschlägen in den Rotorlagern und dadurch zu Lagerschäden infolge Funkenerosion führen kann. Um dieses zu verhindern, werden die Rotoren bei einigen Maschinen gemäss dem Stand der Technik mittels radial am Rotor anliegenden Kohlebürsten geerdet oder zumindest die Spannung zwischen Rotor und Stator über solche Kohlebürsten permanent überwacht, damit im Falle des Erreichens einer kritischen Spannung geeignete Massnahmen eingeleitet werden können.

Während diese Methode für langsam- bis mittelschnelllaufende Maschinen unproblematisch ist und sich in der Praxis bestens bewährt hat, hat sich hingegen gezeigt, dass deren Anwendung bei schnelllaufenden Maschinen mit Drehzahlen oberhalb von 10'000 Umdrehungen pro Minute erhebliche Probleme bereitet und zudem die Standzeiten der Kohlebürsten sehr kurz werden.

### Darstellung der Erfindung

Es stellt sich daher die Aufgabe, eine elektrische Kraft- und/oder Arbeitsmaschine, ein Kontaktmittel für eine solche Maschine sowie ein Verfahren zur Herstellung einer permanenten, elektrisch leitenden Verbindung zu einem Rotor einer solchen Maschine zur Verfügung zu stellen, welche die Nachteile des Standes der Technik nicht aufweisen oder zumindest teilweise vermeiden helfen.

Diese Aufgabe wird vom der elektrischen Kraft- und/oder Arbeitsmaschine, dem Kontaktmittel sowie von dem Verfahren gemäss den unabhängigen Patentansprüchen gelöst.

In einem ersten Aspekt der Erfindung weist die elektrische Kraftmaschine, Arbeitsmaschine oder kombinierte Kraft- und Arbeitsmaschine einen bevorzugterweise mittels Wälzlagern oder Gleitlagern rotierbar um eine Rotationsachse gelagerten Rotor auf. Der Rotor steht im Bereich seiner Rotationsachse, d.h. im Bereich seines Rotationszentrums, mit einem Kontaktmittel in mindestens teilweise schleifendem Körperkontakt, wodurch eine im Betrieb an einem bezogen auf die Maschine feststehenden Ort abgreifbare permanente elektrisch leitende Verbindung zum Rotor geschaffen wird, über welche beispielsweise eine Erdung des Rotors oder das Messen der elektrischen Spannung zwischen Rotor und Stator der Maschine möglich ist. Es hat sich gezeigt, dass erfindungsgemässe Kraftund/oder Arbeitsmaschinen problemlos auch bei sehr hohen Drehzahlen, z.B. bei 30'000 Umdrehungen pro Minute, betrieben werden können und gleichzeitig gute Standzeiten der mit dem Rotor in schleifendem Körperkontakt stehenden Bauteile des Kontaktmittels erzielt werden. Ein "mindestens teilweiser schleifender Körperkontakt" liegt dann vor, wenn zwischen dem Rotor und dem mit dem Rotor in Körperkontakt stehenden und die elektrische Verbindung herstellenden Teil des Kontaktmittels eine Relativbewegung existiert, derart, dass sich die Kontaktflächen, welche die elektrische Verbindung herstellen, im Betrieb permanent in der Berührungsebene gegeneinander verschieben. Ein derartiger Körperkontakt kann zum Beispiel zwischen dem rotierenden Rotor und einem feststehenden, den Körperkontakt herstellenden Teil des Kontaktmittels hergestellt werden, was bevorzugt ist, oder auch zwischen dem rotierenden Rotor und einem mit einer geringeren als der Rotordrehzahl in der Rotationsachse der Rotors rotierenden und den Körperkontakt herstellenden Teil des Kontaktmittels. Im letztgenannten Fall erfolgt eine weitere Übertragung des elektrischen Kontakts von dem rotierenden, den mindestens teilweise schleifenden Körperkontakt zum Rotor herstellenden Teil des Kontaktmittels zu einem bezogen auf die Kraft- und/oder Arbeitsmaschinen feststehenden Bauteil innerhalb des Kontaktmittels, z.B. durch einen verschleissarmen Schleifkontakt.

In einer bevorzugten Ausführungsform der erfindungsgemässen Kraft- und/oder Arbeitsmaschine steht das Kontaktmittel ausschliesslich im Bereich der Rotationsachse des Rotors mit diesem mindestens in teilweise schleifendem Körperkontakt, wodurch sich die Störanfälligkeit und der Verschleiss am Kontaktmittel deutlich herabsetzen lässt. Die besten Ergebnisse werden erzielt, wenn das Kontaktmittel ausschliesslich in der Rotationsachse, d.h. im Rotationszentrum, des Rotors mit dem Rotor in Körperkontakt steht. Der Begriff "im Bereich der Rotationsachse" bezeichnet in diesem Fall einen Bereich, welcher sich mit einem Radius von maximal 5% des grössten Lagerstellendurchmessers des Rotors um die Rotationsachse herum erstreckt, der Begriff "in der Rotationsachse" einen solchen Bereich, welcher sich radial maximal einige Zehntelmillimeter um die Rotationsachse herum erstreckt.

In noch einer bevorzugten Ausführungsform ist die erfindungsgemässe Kraft- und/oder Arbeitsmaschine derartig ausgestaltet, dass das Kontaktmittel den Rotor in axialer Richtung bezogen auf seine Rotationsachse kontaktiert, was bevorzugterweise an einem der Rotorenden erfolgt. "Axial kontaktieren bezogen auf die Rotationsachse" bedeutet, dass die eigentlichen Berührungsflächen zwischen Rotor und Kontaktmittel oder Tangenten an diese Flächen im wesentlichen senkrecht zur Rotationsachse stehen, wobei es bevorzugt ist, wenn diese Flächen eben und genau senkrecht zur Rotationsachse orientiert sind. Auch ist es bevorzugt, wenn die rotorseitige Kontaktfläche in einer axialen Vertiefung an der Stirnseite eines Endes des Rotors angeordnet ist. Hierdurch wird diese zuverlässig vor etwaigen Beschädigungen beim Transport oder beim Einbau des Rotors geschützt.

In einer weiteren bevorzugten Ausführungsform der elektrischen Kraft- und/oder Arbeitsmaschine ist das Kontaktmittel derartig ausgestaltet, dass derjenige Teil oder dasjenige Bauteil desselben, welches direkt mit dem Rotor in Körperkontakt steht, im Kontaktbereich als Spitze oder Kuppe ausgeformt ist, so dass lediglich ein punktueller Körperkontakt zwischen Rotor und Kontaktmittel entsteht. Im Idealfall einer axialen Berührung des Rotors durch ein derartig ausgestaltetes Kontaktmittel genau im Rotationszentrum des Rotors ergibt sich eine minimale Reibung zwischen Rotor und Kontaktmittel und damit ein minimaler Verschleiss.

Bevorzugterweise ist bei allen Ausführungsformen das Kontaktmittel im Kontaktbereich aus einem Material gefertigt, welches deutlich weicher ist als das mit diesem in Kontakt stehende Material des Rotors, wodurch sich ein Verschleissen des Rotors verhindern lässt und bei auftretendem Verschleiss lediglich das Kontaktmittel überholt oder ausgetauscht werden muss. Mit Vorteil kommen als Material für das den Körperkontakt zum Rotor herstellende Teil des Kontaktmittels Kupfer bzw. Kupferlegierungen oder Graphit bzw. stark graphithaltige Materialien zum Einsatz.

Um einen sicheren Körperkontakt zwischen dem den Körperkontakt zum Rotor herstellenden Teil des Kontaktmittels und dem Rotor sicherzustellen, ist es zudem von Vorteil, wenn dieses Teil mit Hilfe eines Anpressmittels leicht federnd gegen die Kontaktfläche des Rotors gedrückt wird. Als geeignete Anpressmittel kommen bevorzugterweise Blatt-, Schrauben- oder Spiralfedern zum Einsatz, es ist jedoch auch die Verwendung hydraulischer oder pneumatischer Zylinder oder die Ausnutzung der Schwerkraft denkbar.

Auch ist es bevorzugt, dass der Bereich der Kraft- und/oder Arbeitsmaschine, in dem dass Kontaktmittel angeordnet ist und/oder in welchem der Körperkontakt zwischen Rotor und Kontaktmittel zustande kommt, ganz oder teilweise mit Öl gefüllt oder von Öl durchströmt ist, was durch die Erfindung erst ermöglicht wird, da die geringen Relativgeschwindigkeiten zwischen den Kontaktflächen des Rotors und des Kontaktmittels dem Aufbau eines Ölpolsters zwischen diesen Flächen und damit einer Unterbrechung des elektrischen Kontakts zwischen diesen abträglich sind. Hierdurch ergibt sich der Vorteil, dass keine aufwendigen Dichtungssysteme zum Schutze des Kontaktbereichs und des Kontaktmittels erforderlich sind, wodurch sich besonders kostengünstige Konstruktionen realisieren lassen.

Weist die erfindungsgemässe Kraft- und/oder Arbeitsmaschine zusätzlich eine mittels elektrischer Leitungen mit dem Kontaktmittel und dem Maschinenstator verbundene elektrische Spannungsmesseinrichtung oder elektrisch mit dem Kontaktmittel und dem Maschinenstator oder einer anderen Erdungsquelle verbundene Erdungsleitung auf, so lassen sich etwaige elektrische Spannungen zwischen dem Rotor und dem Stator messen und überwachen oder durch Erdung des Rotors von vornherein vermeiden.

Ein zweiter Aspekt der Erfindung betrifft ein Kontaktmittel für eine elektrische Kraft- und/oder Arbeitsmaschine gemäss dem ersten Aspekt der Erfindung. Das Kontaktmittel umfasst ein bevorzugterweise aus elektrisch isolierendem Material hergestelltes Kontaktgehäuse, einen elektrisch leitenden, bevorzugterweise im wesentlichen aus Kupfer oder Graphit bestehenden Kontaktstift mit einer Spitze oder Kuppe zum Kontaktieren des Rotors und eine Kontaktfeder. Der Kontaktstift ist im Kontaktgehäuse derartig geführt und die Kontaktfeder ist derartig zwischen dem Kontaktgehäuse und dem Kontaktstift angeordnet, dass der Kontaktstift entgegen der Federkraft der Kontaktfeder in axialer Richtung bezogen auf seine Längsachse relativ zum Kontaktgehäuse in Richtung auf das Kontaktgehäuse zu verschoben werden kann. Mit einem solchen Kontaktmittel lassen sich herkömmliche elektrische rotatorische Kraft- und/oder Arbeitsmaschinen auf einfache und kostengünstige Weise in eine erfindungsgemässe Maschine umwandeln.

Ein dritter Aspekt der Erfindung betrifft ein Verfahren zur Herstellung einer elektrisch leitenden Verbindung zum Rotor einer elektrischen Kraftmaschine, Arbeitsmaschine oder kombinierten Kraft- und Arbeitsmaschine, wie z.B. zu einem Elektromotor oder zu einem Drehstromgenerator, wobei ein Kontaktmittel, wie z.B. ein Kupfer- oder Graphitstift, im Bereich des Rotationszentrums des Rotors, also im Bereich der Rotationsachse desselben, dauerhaft mit dem Rotor in mindestens teilweise schleifenden Körperkontakt gebracht wird. Auf diese Weise lässt sich auch im Betrieb der Maschine mit hohen Drehzahlen eine sichere elektrische Verbindung mit geringem Kontaktverschleiss realisieren.

In einer bevorzugten Ausführung des Verfahrens wird das Kontaktmittel im wesentlichen in axialer Richtung bezogen auf den Rotor mit dem Rotor in Körperkontakt gebracht, was bedeutet, dass die eigentlichen Kontaktflächen am Rotor und am Kontaktmittel bzw. Tangenten an diese Flächen im wesentlichen senkrecht zur Rotationsachse des Rotors angeordnet sind. Ein derartiges Vorgehen ermöglicht einen Körperkontakt zwischen Rotor und Kontaktmittel im Rotationszentrum des Rotors, wodurch ein Körperkontakt bei minimalen Relativgeschwindigkeiten zwischen den Kontaktflächen möglich wird, was besonders verschleissarme Lösungen erlaubt.

Ein vierter Aspekt der Erfindung betrifft die Anwendung des Verfahrens gemäss dem dritten Aspekt der Erfindung zur Messung der elektrischen Spannung zwischen Rotor und Stator einer elektrischen Kraft- und/oder Arbeitsmaschine oder zur Erdung des Rotors einer solchen Maschine. Bevorzugterweise erfolgt die Spannungsmessung bzw. die Erdung sowohl im Stillstand als auch beim Betrieb der Maschine. Eine solche Anwendung des erfindungsgemässen Verfahrens hilft den Betriebszustand der Maschine permanent zu überwachen und Lagerschäden infolge Funkenerosion zu vermeiden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Schnittdarstellung durch ein Ende eines erfindungsgemässen Elektromotors; und
Fig. 2 ein Diagramm mit einem Verlauf der Spannung zwischen Rotor und Stator über der Zeit bei einer elektrischen Synchronmaschine.

### Weg zur Ausführung der Erfindung

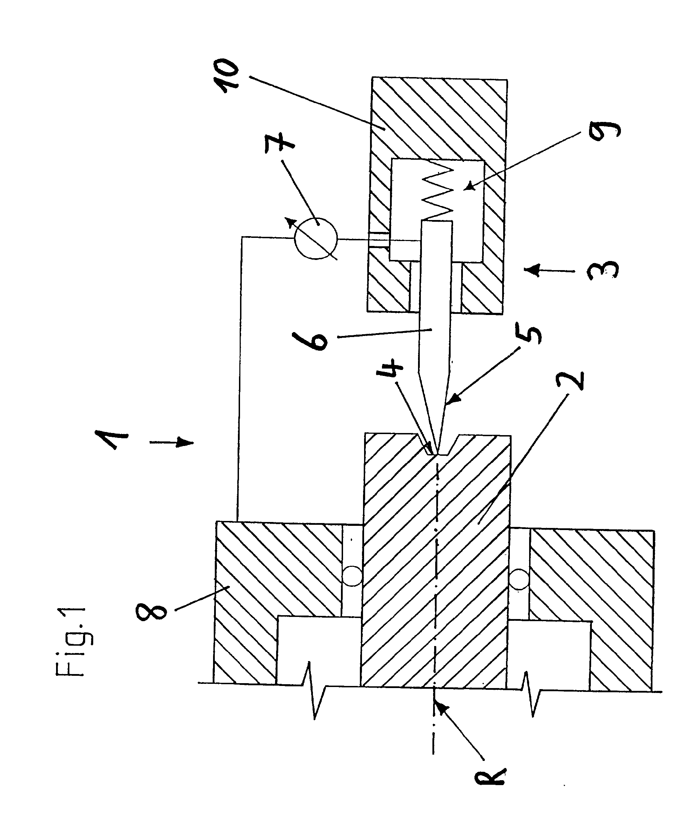

Eine bevorzugte Ausführung der Erfindung ist in Fig. 1 dargestellt. Diese Zeichnung zeigt eine schematische Schnittdarstellung durch die wichtigsten Komponenten eines erfindungsgemässen hochtourigen Elektromotors 1 im Bereich eines Endes des Motors 1. Wie zu erkennen ist, ist der Rotor 2 des Motors 1 an dem dargestellten Ende mit einem Kugellager im Stator 8 des Motors 1 rotierbar um seine Rotationsachse R gelagert und ragt mit seinem Wellenende axial aus dem Stator 8 heraus. Gegenüberliegend der Stirnfläche des Rotorwellenendes ist eine Messkontaktanordnung 3 bestehend aus einem Kontaktgehäuse 10 aus einem elektrisch schlecht leitenden Kunststoff, einem mit einer Spitze 5 versehenen rotationssymmetrischen Kontaktstift 6 aus Kupfer und einer Kontaktfeder 9 angeordnet. Im Zentrum der Stirnseite des aus Stahl bestehenden Rotorwellenendes befindet sich eine axiale Vertiefung, in welcher eine axiale, senkrecht zur Rotationsachse R orientierte Kontaktfläche 4 bereitgestellt wird, auf welche die Spitze 5 des Kontaktstiftes 6 durch die Federkraft der Kontaktfeder 9 gedrückt wird zur Herstellung eines schleifenden und elektrisch leitenden Körperkontakts zwischen dem Kontaktstift 6 und dem Rotor 2. In der Zeichnung nicht erkennbar ist, dass das Kontaktgehäuse 10 im vorliegenden Fall über eine Tragbrücke fest mit dem Stator 8 des Motors 1 verbunden ist und dass der Kontaktstift 6 derartig im Kontaktgehäuse 10 geführt ist, dass sich dieser zwar axial bezogen auf seine Längsachse bewegen kann, nicht aber mit dem Rotor 2 mitrotieren kann. Wie der schematischen Darstellung in Fig. 1 des Weiteren zu entnehmen ist, ist zwischen dem Stator 8 und dem mit dem Rotor 2 in Körperkontakt stehenden Kontaktstift 6 ein Spannungsmessgerät 7 angeordnet, welches sowohl im Stillstand als auch beim Betrieb des Motors 1 die elektrische Spannung zwischen Rotor 2 und Stator 8 misst und eine permanente Überwachung dieser Spannung ermöglicht. Ebenso ist es denkbar, eine elektrisch leitende Verbindung zwischen dem Kontaktstift 6 und dem Stator 8 oder einer anderen Erdungsquelle herzustellen, was beispielsweise durch ein elektrisch leitendes Kabel oder durch Verwendung eines elektrisch leitenden Kontaktgehäuses 10 realisiert werden kann. Wie deutlich zu erkennen ist, entsteht bei der vorliegenden Ausführung ein punktueller Körperkontakt zwischen der Spitze 5 des Kontaktstiftes 6 und der Kontaktfläche 4 des Rotors 2 ausschliesslich und genau im Rotationszentrum bzw. in der Rotationsachse R des Rotors 2, so dass auch beim Betrieb der Maschine mit hohen Drehzahlen zwischen der Kontaktfläche 4 des rotierenden Rotors 2 und der Kontaktfläche an der Spitze 5 des feststehenden Kontaktstiftes 6 nur sehr kleine Relativgeschwindigkeiten vorliegen und daher praktisch kein Verschleiss auftritt.

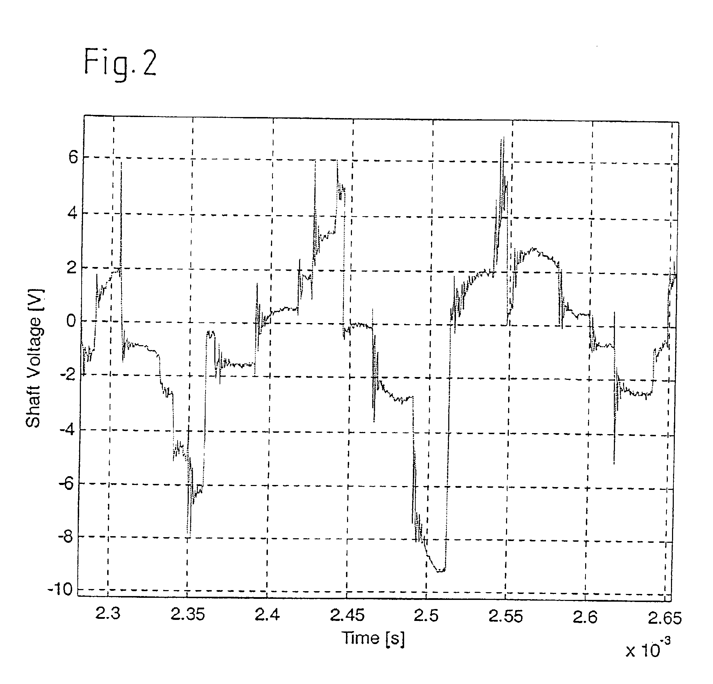

Fig. 2 zeigt ein Diagramm mit dem Verlauf der Spannung zwischen Rotor 2 und Stator 8 bei einem umrichtergespeissten 4-poligen Permanentmagnet-Synchronmotor bei einer Drehzahl von etwa 21'000 Umdrehungen pro Minute. Dieser Spannungsverlauf wurde unter Anwendung des erfindungsgemässen Verfahrens gemessen. Auf der Ordinate ist die elektrische Spannung zwischen Rotor 2 und Stator 8 in Volt aufgetragen, auf der Abszisse die Zeit in Tausendstelsekunden. Wie deutlich zu erkennen ist, variiert die Spannung zwischen Rotor und Stator im vorliegenden Fall zyklisch zwischen etwa + 6 Volt und - 8 Volt. Bei einer Erdung des Rotors wie zuvor beschrieben würde diese Spannung praktisch verschwinden.

Während die Erfindung in der vorliegenden Anmeldung anhand einer bevorzugten Ausführungsform beschrieben wurde, ist klar darauf hinzuweisen, dass die Erfindung nicht auf diese beschränkt ist und in auch anderer Weise innerhalb des Umfangs der nun folgenden Ansprüche ausgeführt werden kann.

### Bezugszeichenliste

- 1: elektrischer Motor
- 2: Rotor
- 3: Messkontaktanordnung
- 4: Kontaktfläche
- 5: Spitze
- 6: Kontaktstift
- 7: Spannungsmessgerät
- 8: Stator
- 9: Kontaktfeder
- 10: Kontaktgehäuse

## Patentansprüche

1. Elektrische Kraft- und/oder Arbeitsmaschine mit einem um eine Rotationsachse (R) rotierbaren Rotor (2) und einem mit dem Rotor (2) mindestens teilweise in schleifendem Körperkontakt stehenden Kontaktmittel (3) zur Herstellung einer permanenten und bei Rotation des Rotors (2) an einem bezogen auf die Maschine (1) feststehenden Ort abgreifbaren elektrisch leitenden Verbindung zum Rotor (2), **dadurch gekennzeichnet, dass** das Kontaktmittel (3) im Bereich der Rotationsachse (R) mit dem Rotor (2) in Körperkontakt steht.

2. Elektrische Kraft- und/oder Arbeitsmaschine nach Anspruch 1, **dadurch gekennzeichnet, dass** das Kontaktmittel (3) ausschliesslich im Bereich der Rotationsachse (R) mit dem Rotor (2) in Körperkontakt steht, und insbesondere, dass es ausschliesslich in der Rotationsachse (R) mit dem Rotor (2) in Körperkontakt steht.

3. Elektrische Kraft- und/oder Arbeitsmaschine nach einem der vorangehenden Ansprüche, **dadurch gekennzeichnet, dass** die Maschine derartig ausgestaltet ist, dass das Kontaktmittel (3) den Rotor (2) in axialer Richtung bezogen auf die Rotationsachse (R) des Rotors (2) kontaktiert.

4. Elektrische Kraft- und/oder Arbeitsmaschine nach einem der vorangehenden Ansprüche, **dadurch gekennzeichnet, dass** das Kontaktmittel (3) in dem Bereich, welcher mit dem Rotor (2) in Kontakt steht, als Spitze (5) oder Kuppe ausgestaltet ist.

5. Elektrische Kraft- und/oder Arbeitsmaschine nach einem der vorangehenden Ansprüche, **dadurch gekennzeichnet, dass** das Kontaktmittel (3) in dem Bereich, welcher mit dem Rotor (2) in Kontakt steht, aus einem Material besteht, welches weicher ist als das Material des Rotors (2) in diesem Bereich, und insbesondere, dass das Kontaktmittel (3) in diesem Bereich im wesentlichen aus Kupfer oder Graphit besteht.

6. Elektrische Kraft- und/oder Arbeitsmaschine nach einem der vorangehenden Ansprüche, **dadurch gekennzeichnet, dass** das Kontaktmittel (3) Anpressmittel (9) aufweist zum Anpressen eines den Körperkontakt zum Rotor herstellenden Teils (6) des Kontaktmittels (3) an den Rotor (2), und insbesondere, dass das Anpressmittel (9) eine Anpressfeder (9) umfasst.

7. Elektrische Kraft- und/oder Arbeitsmaschine nach einem der vorangehenden Ansprüche, **dadurch gekennzeichnet, dass** der Bereich, in dem das Kontaktmittel (3) angeordnet ist, ganz oder teilweise mit Öl gefüllt ist oder von Öl durchströmt ist.

8. Elektrische Kraft- und/oder Arbeitsmaschine nach einem der vorangehenden Ansprüche, **dadurch gekennzeichnet, dass** das Kontaktmittel (3) mit einer Messeinrichtung (7) zur Bestimmung der elektrischen Spannung zwischen dem Rotor (2) und einem statischen Bauteil der Maschine (1) im Betrieb oder mit einer Erdungsleitung zur Erdung des Rotors (2) im Betrieb verbunden ist.

9. Kontaktmittel für eine elektrische Kraftund/oder Arbeitsmaschine gemäss einem der vorangehenden Ansprüche, umfassend ein Kontaktgehäuse (10), einen elektrisch leitenden Kontaktstift (6) mit einer Spitze (5) oder Kuppe und eine Kontaktfeder (9), wobei der Kontaktstift (6) in axialer Richtung bezogen auf seine Längsachse verschiebbar im Kontaktgehäuse (10) geführt ist und die Kontaktfeder (9) derartig zwischen Kontaktgehäuse (10) und Kontaktstift (6) angeordnet ist, dass der Kontaktstift (6) entgegen der Federkraft der Kontaktfeder (9) in seiner Führung im Kontaktgehäuse (10) zum Kontaktgehäuse (10) hin verschiebbar ist.

10. Verfahren zur Herstellung einer permanenten, elektrisch leitenden Verbindung zu einem Rotor (2) einer elektrischen Kraft- und/oder Arbeitsmaschine (1), **dadurch gekennzeichnet, dass** ein Kontaktmittel (3) im Bereich der Rotationszentrum des Rotors dauerhaft mit dem Rotor (2) in mindestens teilweise schleifenden Körperkontakt gebracht wird.

11. Verfahren nach Anspruch 10, **dadurch gekennzeichnet, dass** das Kontaktmittel (3) im wesentlichen in axialer Richtung bezogen auf den Rotor (2) mit dem Rotor (2) in Körperkontakt gebracht wird.

12. Anwendung des Verfahrens nach einem der Ansprüche 10 bis 11 zur Messung einer elektrischen Spannung, insbesondere im Betrieb, zwischen einem Rotor (2) und einem Stator (8) einer elektrischen Kraft- und/oder Arbeitsmaschine (1) oder zur Erdung eines Rotors (2) einer elektrischen Kraft- und/oder Arbeitsmaschine (1), insbesondere im Betrieb.
